# EUROPÄISCHE PATENTSCHRIFT

(11) **EP 2 627 164 B1**
(45) Veröffentlichungstag und Bekanntmachung des Hinweises auf die Patenterteilung: **18.03.2015**
(21) Anmeldenummer: 10768915.0
(22) Anmeldetag: 12.10.2010
(51) Int. Cl.: A01G 3/06

(54) **MESSERANORDNUNG FÜR EIN GARTENSCHNEIDGERÄT UND GARTENSCHNEIDGERÄT MIT EINER SOLCHEN MESSERANORDNUNG**
BLADE ARRANGEMENT FOR A GARDEN CUTTING DEVICE AND GARDEN CUTTING DEVICE HAVING SUCH A BLADE ARRANGEMENT
AGENCEMENT DE COUTEAU POUR UN APPAREIL DE COUPE DE JARDIN ET APPAREIL DE COUPE DE JARDIN DOTÉ D'UN TEL AGENCEMENT DE COUTEAU

(43) Veröffentlichungstag der Anmeldung: 21.08.2013
(73) Patentinhaber: HUSQVARNA AB, 561 82 Huskvarna (SE)
(72) Erfinder: MOCK, Axel, 89134 Blaustein (DE); KOHL, Peter, 89257 Illertissen (DE)
(74) Vertreter: Finkele, Rolf
(86) Internationale Anmeldenummer: PCT/EP2010/065241
(87) Internationale Veröffentlichungsnummer: WO 2012/048733

(56) Entgegenhaltungen:
- WO-A1-2006/050981
- DE-A1- 2 503 512
- DE-A1-102009 014 096
- DE-C- 741 660
- US-A- 3 956 824
- US-A- 5 572 857

## Beschreibung

Die Erfindung betrifft eine Messeranordnung für ein motorisch angetriebenes Gartenschneidgerät.

Gartenschneidgeräte mit einer motorisch oszillierend angetriebenen Messeranordnung sind insbesondere als Heckenscheren oder Grasscheren gebräuchlich. Grasscheren weisen dabei typischerweise ein bezüglich eines Gerätegehäuses feststehendes Untermesser und ein relativ zu diesem im Schneidbetrieb um ein Messergelenk oszillierend schwenkbar angetriebenes Obermesser auf. In einem dem Gerätegehäuse abgewandten Schneidbereich weisen Untermesser und Obermesser mehrere Schneidfinger und zwischen diesen Lücken auf, welche im Schneidbetrieb periodisch geöffnet und geschlossen werden. Obermesser und Untermesser bilden eine einheitlich handhabbare, insbesondere nach Verschleiß austauschbare Messeranordnung. Dabei sind Strukturen zur lösbaren Befestigung am Gerätegehäuse an dem Untermesser ausgebildet. Kupplungselemente zur Ankopplung an einen geräteseitigen Antrieb sind mit dem Obermesser verbunden. Das Obermesser ist durch eine in begrenztem Umfang elastisch biegbare Messerplatte gebildet, wogegen das Untermesser als starr angesehen werden kann. Das Obermesser ist in üblicher Ausführung in einem Messergelenk zu dem Untermesser hin gezogen und bei dem Kupplungselement einerseits über eine erste Stützeinrichtung und im Schneidbereich andererseits direkt gegen das Untermesser abgestützt und dabei unter elastischer Vorspannung zu dem Untermesser hin gewölbt gebogen. Für einen geringen Verschleiß und damit eine lange Laufzeit der Messeranordnung ist eine geringe Vorspannung von Vorteil. Ein derartiges Gartenschneidgerät mit einer entsprechend motorisch oszillierend angetriebenen Messeranordnung ist aus der Offenlegungsschrift der internationalen Patentanmeldung WO 2006/050981 A1 bekannt.

Solche Grasscherenmesser können typischerweise auch zum Schneiden von Sträuchern eingesetzt werden. Insbesondere bei dieser letztgenannten Anwendung tritt häufig der Fall ein, dass bei der die Lücken schließenden Bewegung des Obermessers dünne Äste nicht geschnitten werden, sondern unter Abheben der Schneidfinger des Obermessers vom Untermesser zwischen den beiden Messern eingeklemmt werden. Dies beeinträchtigt zum einen den Fortgang der Schneidarbeit und führt zum anderen zu Beschädigung von an der Pflanze verbleibenden Aststücken. Eine höhere Vorspannung des Obermessers durch eine stärkere Biegung und/oder eine größere Plattendicke führt aber zu einem unerwünscht schnellen Verschleiß.

Der Erfindung liegt die Aufgabe zugrunde, eine Messeranordnung für ein Gartenschneidgerät mit bei geringem Verschleiß verbesserten Schneideigenschaften sowie ein Gartenschneidgerät, insbesondere eine Grasschere mit einer solchen Messeranordnung anzugeben.

Erfindungsgemäße Lösungen sind in den unabhängigen Ansprüchen beschrieben. Die abhängigen Ansprüche enthalten vorteilhafte Ausgestaltungen und Weiterbildungen.

Die Veränderbarkeit der Widerstandskraft des zweiten Messers durch mechanische Mittel ermöglicht vorteilhafterweise zum einen das Schneiden von schwachem Schnittgut wie Gras mit geringem Verschleiß und langer Laufzeit der Messeranordnung als auch das Schneiden von stärkerem Schnittgut wie Sträuchern mit verbesserter Schneidleistung. Die Widerstandskraft sei dabei jeweils am gleichen Ort des Schneidbereichs der Messeranordnung und bei gleicher relativer Position von Obermesser und Untermesser im Schneidbereich gemessen.

Als Schneidgerät sei im folgenden als bevorzugte typische Anwendung eine motorbetriebene Grasschere und als Messeranordnung eine primär auf das Schneiden von Gras abgestimmte Messeranordnung angenommen.

Die Veränderbarkeit der Widerstandskraft hat zur Folge, dass eine im Schneidbetrieb durch zu schneidendes Gut ausgelösten Biegekraft auf das elastisch biegbare zweite Messer bei höherer Widerstandskraft zu einer geringeren zusätzlichen Verformung des zweiten Messers führt als bei geringerer Widerstandskraft. Die zusätzliche Verformung, welche die Krümmung des bereits elastisch vorgebogenen zweiten Messers verstärkt und das zweite Messer im Schneidbereich von dem ersten Messer abheben kann, kann auch ganz unterbleiben, wenn durch die Einstellung der höheren Widerstandskraft in einer ersten Ausführung durch stärkere elastische Vorspannung des zweiten Messers die auftretende Biegekraft die vorgegebene stärkere Vorspannkraft bzw. Widerstandskraft nicht übersteigt.

In besonders vorteilhafter Ausführung erfolgt die Veränderung der Widerstandskraft ausgehend von einer niedrigen Widerstandskraft zu einer höheren Widerstandskraft automatisch beim Auftreten eines eventuell problematischen Verlaufs eines Schneidvorgangs. Hierzu wird von einer Grundeinstellung der Messeranordnung mit geringer, auf das Schneiden von Gras abgestimmter Vorspannung des zweiten Messers, welches typischerweise das Obermesser der Messeranordnung ist, ausgehend ein Abheben des zweiten Messers von dem ersten Messer bei der geringen Widerstandskraft um ein geringes Maß zugelassen. Bei der mit einem solchen Abheben verbundenen Verformung der Messerplatte des Obermessers mit Verstärkung der im Ausgangszustand bereits gegebenen Biegung kommt die Messerplatte in Anschlag an eine zweite Stützeinrichtung, welche durch die veränderte Abstützungsgeometrie zu einer Erhöhung der Widerstandskraft gegen weitere Durchbiegung führt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Draufsicht auf eine gebräuchliche Messeranordnung,
- Fig. 2: die Messeranordnung nach Fig. 1 in Seitenansicht,
- Fig. 3: eine überhöhte Darstellung zu Fig. 2,
- Fig. 4: einen problematischen Schneidvorgang,
- Fig. 5: eine Seitenansicht zu Fig. 4,
- Fig. 6: eine erste erfindungsgemäße Ausführung einer Messeranordnung,
- Fig. 7: eine zweite erfindungsgemäße Ausführung einer Messeranordnung in Draufsicht,
- Fig. 8: Seitenansichten zu Fig. 7.

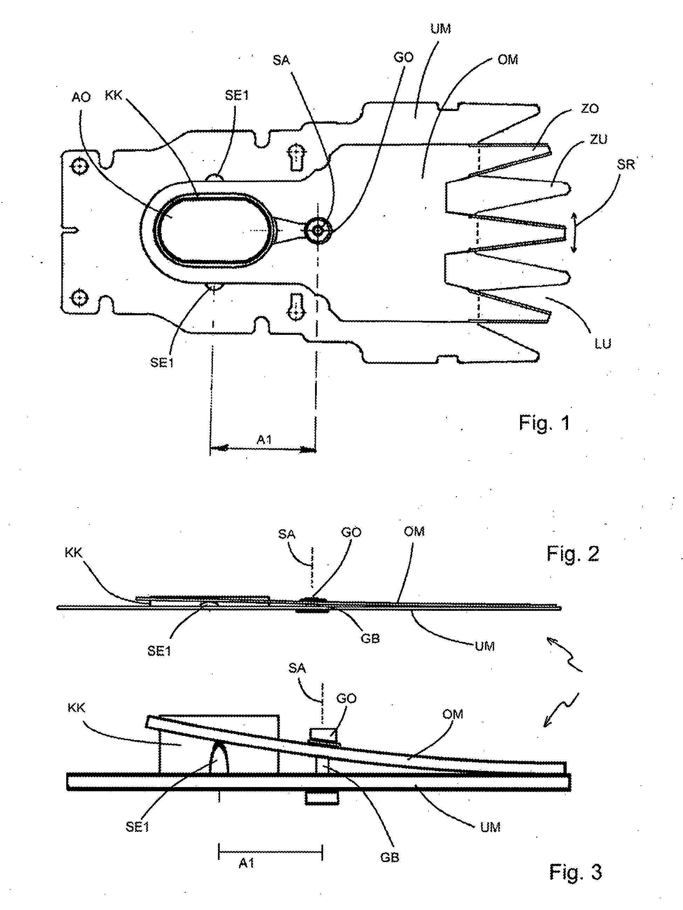

Fig. 1 zeigt in Draufsicht eine gebräuchliche Messeranordnung für eine motorbetriebene Grasschere. Die Messeranordnung enthält ein Untermesser UM und ein Obermesser OM, welche über einen Gelenkbolzen GO miteinander verbunden und relativ zueinander um eine Messerachse SA schwenkbar sind. Fig. 2 zeigt eine Seitenansicht zu Fig. 1. Das Obermesser ist durch eine in geringem Umfang biegbare Messerplatte gebildet. Das Untermesser UM ist gleichfalls plattenförmig und für die nachfolgenden Ausführungen als in sich starr angesehen.

In einem Schneidbereich SB, welcher bei in ein Grasscherengehäuse eingebauter Messeranordnung von dem Gehäuse weg gerichtet ist, weist das Untermesser UM eine Zahnstruktur mit mehreren Zähnen ZU auf, zwischen welchen Lücken LU bestehen. Das Obermesser besitzt gleichfalls eine Zahnstruktur mit Schneidfingern ZO. In der in Fig. 1 dargestellten Mittenstellung des um die Messerachse SA in Bewegungsrichtung SR oszillierend schwenkbaren Obermessers stehen die Schneidfinger ZO des Obermessers in den Lücken LU zwischen den Zähnen ZU des Untermessers.

An dem Schneidbereich SB bezüglich der Messerachse SA bzw. des Gelenkbolzens GO im Messergelenk entgegen gesetzter Position ist eine Kupplungssstruktur angeordnet und mit dem Obermesser OM verbunden, welche zur Ankopplung des Obermessers an eine Ausgangswelle eines motorischen Antriebs der Grasschere ausgebildet ist. Typischerweise ist diese Kupplungsstruktur durch einen Koppelkörper KK gebildet, welcher in eine ovale Aussparung des Obermessers OM eingesetzt ist und seinerseits eine ovale Aussparung AO besitzt, in welche ein exzentrisch bewegter Antriebszapfen des motorischen Antriebs senkrecht zur Zeichenebene der Fig. 1 eingreifen kann.

Der Koppelkörper KK dient zusätzlich in gebräuchlicher Weise dazu, im Bereich der Kupplungsstruktur das Obermesser in einem definierten Abstand von dem Untermesser zu halten. Hierfür weist der Koppelkörper, welcher durch eine ovale Aussparung des Obermessers hindurch ragt und auf der dem Obermesser zugewandten Oberseite des Untermessers aufliegt, eine erste Stützeinrichtung SE1 auf, welche durch von dem ovalen Teil des Koppelkörpers nach zwei entgegen gesetzten Seiten vorspringende, zum Obermesser hin gewölbt verlaufende Stützelemente gebildet ist. Das Obermesser OM liegt elastisch vorgespannt auf den Stützelementen auf und drückt den Koppelkörper an die Oberseite des Untermessers UM.

Bei dem Messergelenk um die Messerachse SA sind Obermesser und Untermesser durch einen Gelenkbolzen GB miteinander verbunden und gegeneinander gezogen, wofür an der Oberseite des Obermessers der Gelenkbolzen einen oberen Bolzenkopf GO aufweist. Abmessungen und Positionierung von erster Stützeinrichtung SO und Gelenkbolzen sind so gewählt, dass das Obermesser OM im Ausgangszustand eine leichte Wölbung zum Untermesser hin aufweist und hierbei eine elastische Vorspannung besitzt. Der Gelenkbolzen GB ist dabei auf Zug beansprucht und das Obermesser ist im Schneidbereich SB direkt und im Bereich der Kupplungsstruktur über die erste Stützeinrichtung SE1 beabstandet gegen das Untermesser abgestützt.

Fig. 3 zeigt zur Verdeutlichung des geschilderten Sachverhalts die Ansicht nach Fig. 2 in einer durch mehrfache Überhöhung in Richtung der Messerachse verzerrte Darstellung, aus welcher die vorgespannte Wölbung des Obermessers OM zum Untermesser hin anschaulich ersichtlich ist.

Die das Obermesser gegen das Untermesser im Schneidbereich SB abstützende Kraft ist während der oszillierenden Bewegung nicht gleichbleibend. Die Schneidkanten der Schneidfinger ZO des Obermessers stützen sich vielmehr annähernd punktförmig an Gegenkanten der Zahnstruktur ZU des Untermessers ab und die Abstützungspunkte verschieben sich während des Schneidvorgangs entlang der Schneidkanten der Schneidfinger ZO des Obermessers. In Fig. 3 ist eine Situation dargestellt, bei welcher das Obermesser mit den dem Messergelenk abgewandten Spitzen der Schneidfinger ZO an der Zahnstruktur ZU des Untermessers abgestützt ist, was einer der beiden Extrempositionen der oszillierenden Messerbewegung mit über der Zahnstruktur ZU des Untermessers liegenden Schneidfingern ZO des Obermessers entspricht.

In der in Fig. 3 dargestellten relativen Lage von Obermesser und Untermesser ist durch die elastisch vorgespannte Wölbung des Obermessers zum Untermesser hin das Obermesser im Schneidbereich mit einer der abstützenden Kraft entsprechenden Ausgangskraft gegen das Untermesser gedrückt. Während des Schneidvorgangs mit entlang der Schneidkanten der Schneidfinger wandernden Abstützpunkten ändert sich diese abstützende Kraft periodisch, sei aber für die nachfolgenden Ausführungen als konstant angenommen.

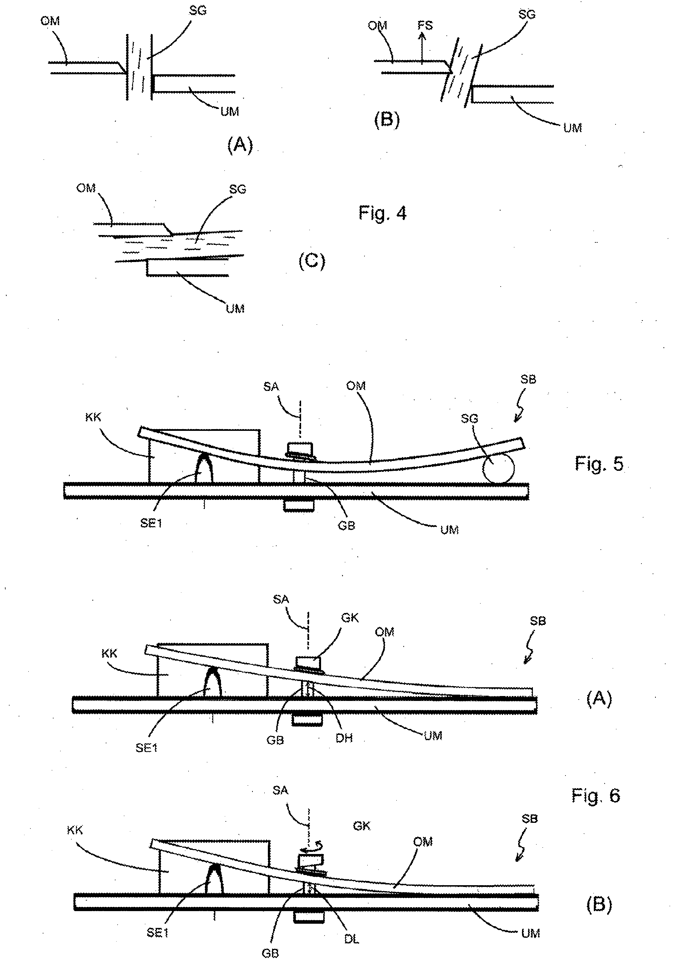

Das Obermesser kann unter Überwindung der durch die Vorspannung des Obermessers gegebenen anfänglichen Kraft, mit welcher das Obermesser im Schneidbereich gegen das Untermesser gedrückt wird und welche nachfolgend als Widerstandskraft bezeichnet sei, von dem Untermesser abgehoben werden, wobei ein solches Abheben auch durch das Schneidgut selbst bewirkt sein kann. In Fig. 4 ist ein Bewegungsablauf des Obermessers OM relativ zum Untermesser UM mit Blickrichtung von vorne auf die Spitzen der Schneidfinger ZO und die Zahnstruktur ZU von Obermesser bzw. Untermesser in mehreren Schritten dargestellt.

In Fig. 4 (A) sei angenommen, dass ein dünner Ast SG als Schneidgut eines Strauches in eine Lücke LU der Zahnstruktur ZU des Untermessers eingerückt ist und ein Schneidfinger des Obermessers OM mit der Schneidkante den Ast SG gegen eine Gegenkante des Untermessers UM drückt. Bei weiterer Bewegung des Obermessers OM in Schneidrichtung SR kann der Fall eintreten, dass der Ast dem Schnitt einen solchen Widerstand entgegen setzt, dass auf den Schneidfinger des Öbermessers OM eine Kraftkomponente FS senkrecht zur Schneidebene des Untermessers entsteht, welche größer ist als die durch die Vorspannung des Obermessers gegebene Widerstandskraft. Hierdurch wird der Schneidfinger des Obermessers von der Schneidebene des Untermessers abgehoben und der Ast als Schneidgut SG stellt sich schräg, wie in Fig. 4 (B) skizziert. Bei weiterer Bewegung des Schneidfingers des Obermessers in Schneidrichtung SR kann der Ast SG den Schneidfinger des Obermessers OM weiter von dem Untermesser weg drücken und sich vollständig zwischen den Schneidfinger und das Untermesser legen, wie in Fig. 4(C) dargestellt ist. Bei der Zurückbewegung des Obermessers wird der Ast SG zwar wieder frei gegeben, der Ast SG ist damit aber noch nicht geschnitten und die Oberfläche des Astes ist über einen Längsabschnitt beschädigt.

Fig. 5 zeigt die Situation nach Fig. 4(C) in einer der Darstellung nach Fig. 3 entsprechenden Seitenansicht, aus welcher die gegenüber der Ausgangssituation nach Fig. 3 erfolgte Abhebung des Obermessers vom Untermesser im Schneidbereich und die verstärkte Durchbiegung des Obermessers ersichtlich sind.

Einem solchen Einklemmen von Schneidgut zwischen übereinander liegende Zahnstrukturen von Obermesser und Untermesser kann an sich durch eine hohe anfängliche Widerstandskraft begegnet werden, was aber mit einem erhöhten Verschleiß der Schneidkanten der Messeranordnung einhergeht und einen häufigen Austausch der Messeranordnung erfordert.

Der Erfindung liegt die Erfahrung zugrunde, dass Messeranordnungen der beschriebenen Art mit elastisch gebogenem, vorgespanntem Obermesser überwiegend als Grasscheren eingesetzt sind und dass bei einem solchen Anwendungsfall eine geringe Vorspannung mit einer niedrigen Widerstandskraft ausreichend ist und der Verschleiß dadurch gering gehalten werden kann. Um auch bei der Anwendung zum Schneiden von Sträuchern eine verbesserte Schneidleistung zu erzielen und die anhand von Fig. 4 und 5 beschriebenen Problemsituationen weitgehend zu vermeiden, sieht die Erfindung vor, die Widerstandskraft, welche einem Abheben des Obermessers von dem Untermesser entgegen wirkt, in der Art veränderlich zu machen, dass in einem ersten Betriebszustand die Widerstandskraft mit am Untermesser im Schneidbereich anliegendem Obermesser auf das Schneiden von Gras abgestimmt und somit gering ist und in einem zweiten Betriebszustand die Widerstandskraft gegen ein Abheben des Obermessers in eine in Fig. 5 dargestellte Position durch eine höhere Widerstandskraft erschwert ist. Als höhere Widerstandskraft sei dabei eine Widerstandskraft verstanden, welche bei v ergleichbaren Messerpositionen über die bei der Anordnung nach Fig. 5 entstehende Widerstandskraft, welche mit zunehmender Biegung des Obermessers gleichfalls steigt, hinaus geht. Hierfür sieht die Erfindung mechanische Mittel vor, welche eine solche Veränderung der Widerstandskraft bewirken.

Fig. 6 zeigt eine erste vorteilhafte Ausführungsform der Erfindung, bei welcher eine Erhöhung der Widerstandskraft dadurch erreicht wird, dass zwischen einem ersten, in Fig. 6 (A) dargestellten Betriebszustand, welcher der Darstellung nach Fig. 3 entspricht, und einem zweiten, in Fig. 6 (B) dargestellten Betriebszustand ein Wechsel durch den Benutzer möglich ist, wobei in dem zweiten Betriebszustand nach Fig. 6 (B) die Wölbung des Obermessers OM zum Untermesser hin verstärkt und dadurch die Widerstandskraft, mit welcher das Obermesser im Schneidbereich an dem Untermesser anliegt und welche für ein Abheben des Obermessers vom Untermesser überwunden werden muss, erhöht ist. Der Benutzer kann daher bei Wechsel des Anwendungsfalls zwischen Schneiden von Gras einerseits und Schneiden von Sträuchern andererseits nach eigenem Ermessen zwischen den beiden Betriebszuständen wechseln und insbesondere zum Schneiden von Gras den verschleißarmen Betriebszustand nach Fig. 6 (A) mit niedrigerer Widerstandskraft und zum Schneiden von Sträuchern den Betriebszustand nach Fig. 6 (B) mit höherer Widerstandskraft wählen.

Ein Wechsel zwischen den beiden Betriebszuständen nach Fig. 6 (A) und 6 (B) kann im skizzierten Beispiel dadurch erfolgen, dass ein an der Oberseite des Obermessers OM anliegender Bolzenkopf GK des Gelenkbolzens GB eine Schrägfläche aufweist, welche im ersten Betriebszustand nach Fig. 6 (A) annähernd parallel zum schrägen Verlauf des gewölbten Obermessers OM im Bereich des Messergelenks ausgerichtet ist. Der Bolzenkopf GK des Gelenkbolzens ist, wie durch den geschwungenen Pfeil in Fig. 6 (B) angedeutet, um die Messerachse SA verdrehbar und, beispielsweise durch eine Verdrehung um 180° gegenüber der Stellung nach Fig. 6 (A), in eine Drehstellung verlagerbar, bei welcher die höhere Kante des Bolzenkopfes GK, welche in dem Betriebszustand nach Fig. 6 (A) dem Schneidbereich SB zugewandt ist, im Betriebszustand nach Fig. 6 (A) dem Schneidbereich SB abgewandt und der ersten Stützeinrichtung SE1 zugewandt ist. Hierdurch wird der Abstand zwischen Obermesser und Untermesser bei der Messerachse SA von einem größeren Bereich DH im Betriebszustand nach Fig. 6 (A) auf einen kleineren Wert DL im Betriebszustand nach Fig. 6 (B) verringert, was mit einer stärkeren Durchwölbung des Obermessers OM und einer Erhöhung der elastischen Vorspannung und einer erhöhten Widerstandskraft gegen ein Abheben des Obermessers OM vom Untermesser UM im Schneidbereich einhergeht. Die Verdrehung des Gelenkkopfes GK kann vorteilhafterweise werkzeuglos manuell durch den Benutzer erfolgen. Vorteilhafterweise ist der Bolzenkopf GK mit einer deutlich visuell erkennbaren Vorrichtung verbunden, aus deren Ausrichtung oder Stellung der Benutzer schnell den jeweils eingestellten Betriebszustand erkennen kann.

Für die Veränderung der Durchwölbung des Obermessers OM zum Untermesser UM hin sind neben der Schrägfläche an dem Gelenkkopf GK verschiedene Möglichkeiten gegeben und dem Fachmann an sich geläufig. Beispielsweise kann der Gelenkbolzen GB eine Wendelstruktur aufweisen, welche mit einer Gegen-Wendelstruktur eines Bolzenkopfes zusammen wirkt und den Bolzenkopf bei relativer Verdrehung zwischen Gelenkbolzen und Bolzenkopf über eine durch die Wendelstrukturen gegebene Verbindung nach Art einer Gewindeverbindung in Richtung der Messerachse SA verschiebt. Neben den beiden Betriebszuständen nach Fig. 6 (A) und 6 (B) können auch Zwischenstellungen vorgesehen sein. Die relative Drehposition des Gelenkkopfes relativ zu dem Gelenkbolzen kann in unterschiedlichen Betriebszuständen kraftschlüssig oder vorzugsweise durch Rast- oder Schnappverbindungen gesichert sein. Eine Verringerung des Abstands zwischen Obermesser und Untermesser bei der Messerachse SA kann auch durch eine axiale Verschiebung eines an der Unterseite des Untermessers angeordneten Gelenkkopfes oder eines vergleichbaren, mit dem Gelenkbolzen GB verbundenen Elements erfolgen.

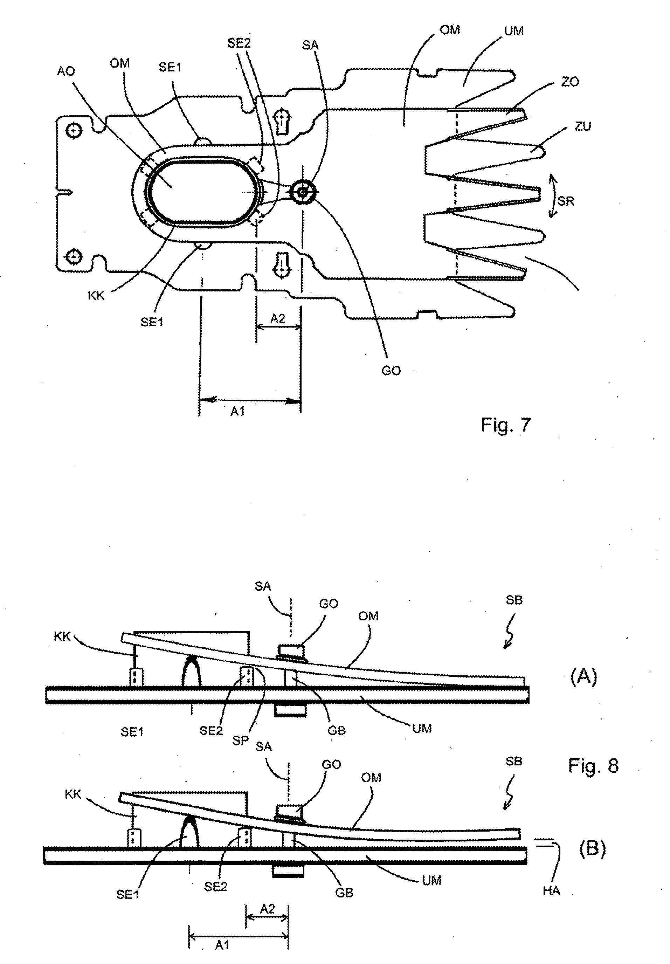

In Fig. 7 und Fig. 8 ist eine besonders vorteilhafte Ausführung der Erfindung skizziert, bei welcher die erfindungsgemäß vorgesehene Erhöhung der Widerstandskraft gegen ein Abheben des Obermessers in die in Fig. 5 dargestellte unerwünschte Stellung nicht durch eine Erhöhung der Vorspannung in der Messerstellung nach Fig. 3 erzielt wird, sondern erst während eines eventuell problematischen Schneidvorgangs eine Erhöhung der Widerstandskraft eintritt. Hierfür ist eine zweite Stützeinrichtung SE2 vorgesehen, welche im skizzierten Beispiel zwischen der Messerachse SA und der ersten Stützeinrichtung SE1 angeordnet ist. Zum Vergleich sind Abstandsmaße A1 und A2 in Fig. 7 und Fig. 8 eingetragen, welche einen Abstand A1 der ersten Stützeinrichtung SE1 von der Messerachse SA und einen Abstand A2 der zweiten Stützeinrichtung SE2 von der Messerachse SA bezeichnen.

In einer ersten Betriebsstellung mit im Schneidbereich am Untermesser anliegendem Obermesser sind für die Messeranordnung die Betriebsbedingungen der Anordnung nach Fig. 3 gegeben, für welche eine geringe Widerstandskraft gegen das Abheben des Obermessers vom Untermesser angenommen sei, so dass in diesem Betriebszustand die Messeranordnung verschleißarm und dadurch mit langer Laufzeit betrieben werden kann. Das Obermesser OM hat in diesem ersten Betriebszustand einen geringen Abstandsspalt SP zu der,zweiten Stützeinrichtung SE2, wie in Fig. 8 (A) erkennbar ist.

Wird die Messeranordnung zum Schneiden widerstandsfähigeren Schnittguts nach Fig. 4 (A) eingesetzt, erlaubt die anfänglich geringe Widerstandskraft, mit welcher das Obermesser im Schneidbereich am Untermesser anliegt, ein anfängliches Abheben des Obermessers vom Untermesser um ein geringes Maß (HA) in eine dem Zwischenschritt nach Fig. 4 (B) entsprechende Position. Dabei wird die Wölbung des Messers sowohl zwischen Messerachse SA und Schneidbereich als auch zwischen Messerachse SA und erster Stützeinrichtung SE1 erhöht, wodurch das Obermesser zur Anlage an die zweite Stützeinrichtung SE2 kommt. Für ein weiteres Abheben des Obermessers von dem Untermesser ist ab diesem Zwischenzustand die veränderte Geometrie mit dem kürzeren Stützabstand A2 zwischen dem Messergelenk bei der Schwenkachse SA und der zweiten Stützeinrichtung SE maßgebend, wodurch eine Verformbarkeit des Obermessers auf der der zweiten Stützeinrichtung SE2 zugewandten Seite stark verringert ist und eine weitere Durchbiegung im wesentlichen nur noch auf der dem Schneidbereich zugewandten Seite des Obermessers stattfinden kann, so dass dort die Widerstandskraft gegen weiteres Abheben sprunghaft erhöht ist. Es zeigt sich, dass hierdurch das Entstehen von Situationen der in Fig. 4(C) skizzierten Art stark verringert werden kann.

Die zweite Stützeinrichtung SE2 kann in bevorzugter Ausführungsform durch zusätzliche Vorsprünge an dem Koppelkörper KK gebildet sein, wobei die längliche Form des Koppelkörpers mit auf die Messerachse SA zuweisender Längsausrichtung vorteilhaft ausgenutzt werden kann, indem die zweite Stützeinrichtung SE2 durch Fortsätze von dem Koppelkörper KK an einer zweiten Stützposition, welche dem Messergelenk zugewandt ist, ausgebildet sein kann. Diese Ausführung ist daher auf besonders einfache Weise mit nur geringer Änderung gegenüber bekannten Messeranordnungen erreichbar, wobei die Änderung im wesentlichen auf eine Abänderung des Koppelkörpers mit zusätzlicher Anordnung von Vorsprüngen der zweiten Stützeinrichtung SE2 beschränkt ist. Soweit der Koppelkörper KK durch seine Form in unterschiedlicher Ausrichtung in die Aussparung im Obermesser einsetzbar ist, können vorteilhafterweise Vorsprünge als zweite Stützeinrichtungen SE2 an gegenüber liegenden Seiten vorgesehen sein, so dass der Koppelkörper in zwei um 180° gegeneinander verdrehte gleichwertige Ausrichtungen in das Obermesser eingesetzt werden kann und dabei jeweils Vorsprünge als zweite Stützeinrichtung SE2 zwischen erster Stützeinrichtung SE1 und Messergelenk vorliegen und die beschriebene Wirkung entfalten.

Der Koppelkörper KK ist durch das vorgespannte Obermesser gegen die dem Obermesser zugewandten Oberseite des Untermessers gedrückt und gleitet während der oszillierenden Bewegung des Obermessers auf der Oberseite des Untermessers. Der Koppelkörper KK besteht typischerweise aus Kunststoff.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Messeranordnung für ein motorisch angetriebenes Gartenschneidgerät, welche ein erstes Messer (UM) und ein relativ zu diesem um ein Messergelenk (SA) oszillierend schwenkend bewegbares, durch eine elastisch biegbare Messerplatte gebildetes zweites Messer (OM) enthält, das in einem Schneidbereich (SB) mehrere Schneidfinger (ZO) aufweist, wobei die Messerplatte bei dem Messergelenk quer zu ihrer Plattenfläche in Richtung des ersten Messers gezogen und unter elastischer Biegeverformung zum einen an einer den Schneidbereich bezüglich der Messerachse abgewandten ersten Stützposition (A1) über eine erste Stützeinrichtung (SE1) und zum anderen im Schneidbereich (SB) gegen das erste Messer (UM) abgestützt ist, und dabei einer durch zu schneidendes Schneidgut bewirkten von dem ersten Messer (UM) senkrecht zur Plattenfläche weg gerichteten Biegekraft (FS) eine Widerstandskraft entgegensetzt,
**dadurch gekennzeichnet,**
**dass** mechanische Mittel zur **Erhöhung** der Widerstandskraft vorgesehen sind.

2. Messeranordnung nach Anspruch 1, **dadurch gekennzeichnet, dass** die mechanischen Mittel zur Veränderung des Abstands (DH, DL) der beiden Messer (OM, UM) bei dem Messergelenk (SA) eingerichtet sind.

3. Messeranordnung nach Anspruch 2, **dadurch gekennzeichnet, dass** ein an der dem ersten Messer (UM) abgewandten Seite des zweiten Messers (OM) anliegender Anlagekörper (GK) zur Veränderung des Abstands des zweiten Messers (OM) zu dem ersten Messer (UM) verdrehbar ist.

4. Messeranordnung nach einem der Ansprüche 1 bis 3, **dadurch gekennzeichnet, dass** die mechanischen Mittel eine zweite Stützeinrichtung (SE2) zwischen den beiden Messern (OM, UM) mit einer zweiten Stützposition (A2) zwischen dem Messergelenk (SA) und der ersten Stützposition (A1) enthalten.

5. Messeranordnung nach Anspruch 4, **dadurch gekennzeichnet, dass** die zweite Stützeinrichtung (SE2) nicht in allen Stellungen der Messeranordnung stützend zwischen den beiden Messern (OM, UM) wirkt.

6. Messeranordnung nach Anspruch 5, **dadurch gekennzeichnet, dass** die zweite Stützeinrichtung (SE2) erst wirksam wird, wenn die beiden Messer im Schneidbereich (SB) um ein vorgebbares Maß (HA) voneinander abgehoben sind.

7. Messeranordnung nach einem der Ansprüche 4 bis 6, **dadurch gekennzeichnet, dass** erste und zweite Stützeinrichtung (SE1, SE2) in einem gemeinsamen Stützkörper (KK) vereinigt sind.

8. Messeranordnung nach Anspruch 7, **dadurch gekennzeichnet, dass** der zweite Stützkörper (KK) zugleich eine ovale Antriebsbuchse (AO) für einen Exzenterantrieb bildet.

9. Schneidgerät mit einer Messeranordnung nach einem der vorhergehenden Ansprüche.

## Claims

1. Blade arrangement for a motor-driven garden cutting device including a first blade (UM) and a second blade (OM) movable in an oscillating pivoting way around a blade pivot (SA) relative to this first blade, which second blade is formed by a flexibly bendable blade plate and has multiple cutting teeth (ZO) in a cutting region (SB), wherein the blade plate is pulled in the direction of the first blade transverse to its plate surface at the blade pivot and is supported on the one hand by elastic bending deformation at a first support position (A1) facing away from the blade axis relative to the cutting region and is supported on the other hand against the first blade (UM) in the cutting region (SB), and thereby an opposing force is offered to a flexural force (FS) directed from the first blade (UM) perpendicularly away from the plate surface and caused by cutting through the material to be cut,
**characterized in that**
mechanical means for **increasing** the opposing force are provided.

2. Blade arrangement according to Claim 1, **characterized in that** the mechanical means for changing the spacing (DH, DL) of the two blades (OM, UM) are incorporated at the blade pivot (SA).

3. Blade arrangement according to Claim 2, **characterized in that** a contact body (GK) abutting the side of the second blade (OM) facing away from the first blade (UM) is rotatable in order to change the spacing of the second blade (OM) to the first blade (UM).

4. Blade arrangement according to one of Claims 1 to 3, **characterized in that** the mechanical means include a second support means (SE2) between the two blades (OM, UM) having a second support position (A2) between the blade pivot (SA) and the first support position (A1).

5. Blade arrangement according to Claim 4, **characterized in that** the second support means (SE2) do not function in a supporting way between the two blades (OM, UM) in all positions of the blade arrangement.

6. Blade arrangement according to claim 5, **characterized in that** the second support means (SE2) are effective only when the two blades are lifted off of each other by a predefined mass (HA) in the cutting region (SB).

7. Blade arrangement according to one of Claims 4 to 6, **characterized in that** first and second support means (SE1, SE2) are consolidated in a common support body (KK).

8. Blade arrangement according to Claim 7, **characterized in that** the second support body (KK) forms at the same time an oval drive socket (AO) for an eccentric drive.

9. Cutting device having a blade arrangement according to one of the preceding claims.

## Revendications

1. Agencement de couteaux pour un appareil de coupe de jardin à moteur comprenant un premier couteau (UM) et un deuxième couteau (OM) mobile de manière oscillante et pivotante par rapport à lui autour d'une charnière de couteau (SA), formé par une plaque de couteau élastiquement pliable, qui présente plusieurs doigts de coupe (ZO) dans une zone de coupe (SB), la plaque de couteau, en ce qui concerne la charnière de couteau, étant tirée transversalement à la surface de sa plaque en direction du premier couteau et étant appuyée sous déformation élastique d'une part à une première position d'appui (A1) opposée à la zone de coupe par rapport à l'axe de la lame par l'intermédiaire d'un premier moyen d'appui (SE1) et étant appuyée d'autre part contre le premier couteau (UM) dans la zone de coupe (SB), et opposant ainsi une force de résistance par le biais d'une force de flexion (FS) opposée au premier couteau (UM) perpendiculaire à la surface de la plaque, produite par le produit à trancher à découper,
**caractérisé en ce que**
des moyens mécaniques sont prévus pour augmenter la résistance.

2. Agencement de couteaux selon la revendication 1, **caractérisé en ce que** les moyens mécaniques destinés à modifier la distance (DH, DL) des deux couteaux (OM, UM) sont installés au niveau de la charnière de couteau (SA).

3. Agencement de couteaux selon la revendication 2, **caractérisé en ce qu'**un corps d'appui adjacent (GK) au côté du deuxième couteau (OM) qui est éloigné du premier couteau (UM) est rotatif pour modifier la distance du deuxième couteau (OM) au premier couteau (UM).

4. Agencement de couteaux selon l'une des revendications 1 à 3, **caractérisé en ce que** les moyens mécaniques contiennent un deuxième dispositif d'appui (SE2) entre les deux couteaux (OM, UM) avec une deuxième position d'appui (A2) entre la charnière de couteau (SA) et la première position d'appui (A1).

5. Agencement de couteaux selon la revendication 4, **caractérisé en ce que** le deuxième dispositif d'appui (SE2) ne supporte pas dans toutes les positions de l'ensemble de couteaux entre les deux couteaux (OM, UM).

6. Agencement de couteaux selon la revendication 5, **caractérisé en ce que** le deuxième dispositif d'appui (SE2) n'est efficace que si les deux couteaux situés dans la zone de coupe (SB) sont décrochés l'un de l'autre d'une valeur prédéterminée (HA).

7. Agencement de couteaux selon l'une des revendications 4 à 6, **caractérisé en ce que** le premier et le deuxième dispositif d'appui (SE1, SE2) sont réunis dans un corps d'appui commun (KK).

8. Agencement de couteaux selon la revendication 7, **caractérisé en ce que** le deuxième corps d'appui (KK) forme en même temps un manchon d'entraînement ovale (AO) pour une commande à excentrique.

9. Appareil de coupe avec un ensemble de couteaux suivant l'une quelconque des revendications précédentes.
